(19) **Europäisches Patentamt / European Patent Office / Office européen des brevets**

(11) **EP 4 749 894 A1**

(12) **EUROPEAN PATENT APPLICATION**
published in accordance with Art. 153(4) EPC

(43) Date of publication:
**27.05.2026 Bulletin 2026/22**

(21) Application number: **24842946.6**

(22) Date of filing: **03.07.2024**

(51) International Patent Classification (IPC):
**H02K 19/36** (2006.01)     **H02K 19/26** (2006.01)

(52) Cooperative Patent Classification (CPC):
**H02K 19/26; H02K 19/36**

(86) International application number:
**PCT/JP2024/024093**

(87) International publication number:
**WO 2025/018153 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.07.2023  JP 2023118125**

(71) Applicant: **DENSO CORPORATION**
**Kariya-city, Aichi 448-8661 (JP)**

(72) Inventors:
• **YOSHIMURA, Masataka**
**Kariya- city, Aichi 4488661 (JP)**
• **MATSUDA, Masashi**
**Kariya- city, Aichi 4488661 (JP)**
• **KANEDA, Yoshimasa**
**Kariya- city, Aichi 4488661 (JP)**
• **TSUCHIYA, Hiroyuki**
**Kariya- city, Aichi 4488661 (JP)**

(74) Representative: **Kuhnen & Wacker**
**Patent- und Rechtsanwaltsbüro PartG mbB**
**Prinz-Ludwig-Straße 40 A**
**85354 Freising (DE)**

(54) **FIELD-WINDING ROTATING ELECTRICAL MACHINE**

(57)    In a wound-field rotating electric machine, a rotor (60) includes: a rotor core (61) having main pole portions (62) provided respectively for magnetic poles, which are aligned in a circumferential direction, and each protruding in a radial direction; and a field coil (70) wound on the main pole portions of the rotor core. The field coil has a first coil section (i.e., first coil modules 111) and a second coil section (i.e., second coil modules 112) that are connected in series with each other to form a series connection unit. Each of the first and second coil sections is wound on all of the main pole portions of the rotor core such that the first coil section is located on a side closer to a stator in the radial direction, whereas the second coil section is located on a side farther from the stator in the radial direction. The first coil section is connected in series with a capacitor to form a series resonant circuit, whereas the second coil section is connected in parallel with the capacitor to form a parallel resonant circuit. The volume resistivity of a conductor material of the first coil section is higher than the volume resistivity of a conductor material of the second coil section.

FIG.9

## Description

[CROSS-REFERENCE TO RELATED APPLICATION]

The present application is based on Japanese Patent Application No. 2023-118125 filed on July 20, 2023, the contents of which are incorporated by reference into the present application.

[TECHNICAL FIELD]

The disclosure in this description relates to wound-field rotating electric machines.

[BACKGROUND ART]

There is known a wound-field rotating electric machine as disclosed in, for example, Patent Document 1. The wound-field rotating electric machine includes a rotor in which a field coil is wound on main pole portions (or magnetic salient pole portions) of a rotor core provided respectively for magnetic poles aligned in a circumferential direction. The wound-field rotating electric machine is configured so that field current is induced in the field coil by harmonic current flowing through a coil (i.e., stator coil) of a stator opposed to the rotor. Moreover, the field coil has a first coil section and a second coil section that are connected in series with each other to form a series connection unit. The first and second coil sections are wound on the main pole portions of the rotor core such that the first coil section is located on a side closer to the stator in a radial direction, whereas the second coil section is located on a side farther from the stator in the radial direction. Furthermore, a series resonant circuit is formed by the first coil section and a capacitor; and a parallel resonant circuit is formed by the second coil section and the capacitor.

[PRIOR ART LITERATURE]

[PATENT LITERATURE]

[Patent Document 1]: Japanese Patent Application Publication No. JP 2020-054064 A

[SUMMARY OF THE INVENTION]

In the wound-field rotating electric machine having the above-described configuration, the first coil section is located on the side closer to the stator, whereas the second coil section is located on the side farther from the stator; therefore, eddy current loss may occur in the first coil section due to leakage magnetic flux of high-frequency excitation magnetic flux from the stator crossing the first coil section. Moreover, upon occurrence of eddy current loss in the first coil section, the temperature of the first coil section will become relatively high. Consequently, inconveniences may occur such as a limitation on electric current flowing through the first coil section.

The present disclosure has been accomplished in view of the above circumstances. It is, therefore, an object of the present disclosure to provide a wound-field rotating electric machine which enables reduction in eddy current loss occurring in, of a first coil section and a second coil section that together constitute a field coil, the first coil section located on a stator side.

According to the present disclosure, there is provided a wound-field rotating electric machine comprising:

a stator including a stator coil; and
a rotor including a rotor core and a field coil, the rotor core having main pole portions provided respectively for magnetic poles, which are aligned in a circumferential direction, and each protruding in a radial direction, the field coil being wound on the main pole portions of the rotor core,
wherein:

the wound-field rotating electric machine is configured to have high-frequency current flowing through the stator coil for inducing field current in the field coil;
the field coil has a first coil section and a second coil section that are connected in series with each other to form a series connection unit;
each of the first and second coil sections is wound on all of the main pole portions of the rotor core such that the first coil section is located on a side closer to the stator in the radial direction, whereas the second coil section is located on a side farther from the stator in the radial direction;
the first coil section is connected in series with a capacitor to form a series resonant circuit, whereas the second coil section is connected in parallel with the capacitor to form a parallel resonant circuit; and
the volume resistivity of a conductor material of the first coil section is higher than the volume resistivity of a conductor material of the second coil section.

A rotor of a wound-field rotating electric machine may be configured such that: a field coil has a first coil section and a second coil section that are connected in series with each other to form a series connection unit; the first and second coil sections form, together with a capacitor, both a series resonant circuit and a parallel resonant circuit; and the first coil section is located on a side closer to a stator in a radial direction, whereas the second coil section is located on a side farther from the stator in the radial direction. In this case, eddy current loss may occur in the first coil section, which is located on the side closer to the stator, due to leakage magnetic flux of high-frequency excitation magnetic flux from the stator crossing the first coil section. In view of the above, in the wound-field rotating electric machine according to the present disclosure, the volume resistivity of the conductor material of the first coil section is set to be higher than the volume resistivity of the conductor material of the second coil section. Consequently, it becomes possible to make the first coil section less affected by the leakage magnetic flux. As a result, it becomes possible to reduce eddy current loss occurring in, of the first coil section and the second coil section that together constitute the field coil, the first coil section located on the stator side.

[BRIEF DESCRIPTION OF THE DRAWINGS]

The above-described object, other objects, features and beneficial advantages according to the present disclosure will become more apparent from the following detailed explanation with reference to the accompanying drawings. In the drawings:

FIG. 1 is an overall configuration diagram of a control system for a rotating electric machine according to an embodiment;
FIG. 2 is a diagram illustrating an inverter and its peripheral configuration;
FIG. 3 is a transverse cross-sectional view of both a rotor and a stator;
FIG. 4 is a diagram illustrating an electric circuit formed in the rotor;
FIG. 5 is a perspective view illustrating the overall configuration of the rotor;
FIG. 6 is an exploded perspective view of the rotor;
FIG. 7 is a longitudinal cross-sectional view of the rotor;
FIG. 8 is a perspective view of a rotor main body, showing a coil unit in a disassembled manner;
FIG. 9 is a transverse cross-sectional view of part of the rotor main body;
FIG. 10 is a cross-sectional view schematically showing electrical conductor wires of first and second coil sections;
FIG. 11 is a schematic diagram showing the first and second coil sections in a state of having been wound on main pole portions of a rotor core;
FIG. 12 is a perspective view showing a configuration for the connection of coil bodies of the first and second coil sections;
FIG. 13 is an electric circuit diagram of the rotor;
FIGS. 14(a) and 14(b) are cross-sectional views of the electrical conductor wires;
FIG. 15 is a longitudinal cross-sectional view showing end portions of electrical conductor wires of coil bodies in a state of having been joined together in a component holder; and
FIG. 16 is a cross-sectional view schematically showing electrical conductor wires of first and second coil sections according to a modification.

[EMBODIMENTS FOR CARRYING OUT THE INVENTION]

Hereinafter, an embodiment embodying a rotating electric machine according to the present disclosure will be described with reference to the drawings. The rotating electric machine may be used, for example, as a driving power source in an electrified vehicle such as an electric vehicle or a hybrid vehicle.

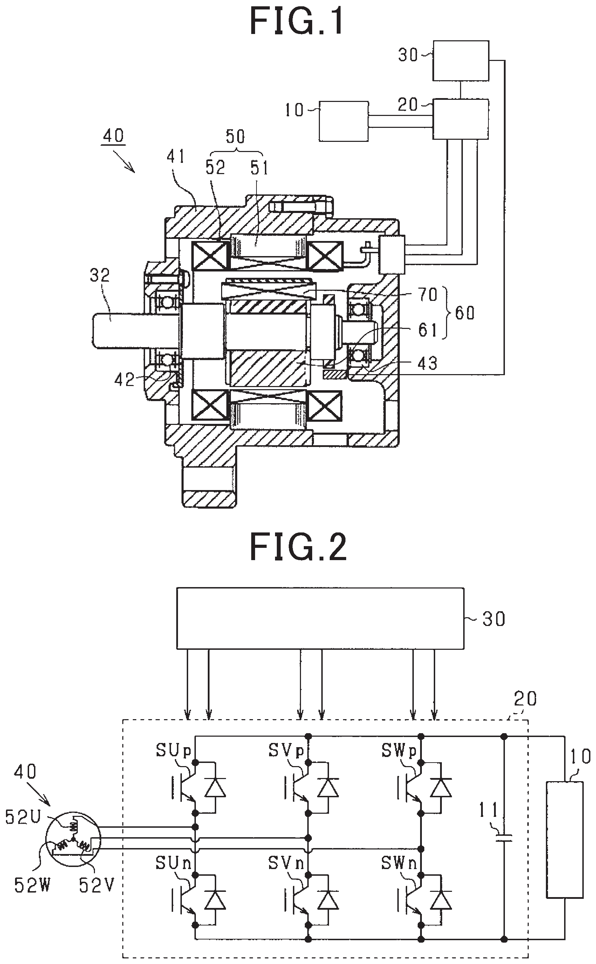

First, a control system, which includes the rotating electric machine, will be described with reference to FIG. 1. The control system includes a DC power source 10, an inverter 20 and a control device 30, in addition to the rotating electric machine 40. The rotating electric machine 40 is configured as a wound-field synchronous rotating electric machine. In addition, the rotating electric machine 40, the inverter 20 and the control device 30 may be either integrated into a single electromechanical drive apparatus or configured as individual components.

The rotating electric machine 40 includes a housing 41, and a stator 50 and a rotor 60 both of which are accommodated in the housing 41. In the present embodiment, the rotating electric machine 40 is of an inner rotor type such that the rotor 60 is arranged radially inside the stator 50. The stator 50 includes a stator core 51 and a stator coil 52 wound on the stator core 51. The stator coil 52 may be formed of, for example, copper wires. The stator coil 52 includes a U-phase winding 52U, a V-phase winding 52V and a W-phase winding 52W, which are arranged in such a manner as to be offset from each other by 120° in electrical angle. The rotor 60 includes a rotor core 61 and a field coil 70. The rotor core 61 has a center hole in which a rotating shaft 32 is fitted. The rotating shaft 32 is rotatably supported by the housing 41 via a pair of bearings 42 and 43.

As shown in FIG. 2, the inverter 20 includes: a U-phase series connection unit consisting of a U-phase upper-arm switch SUp and a U-phase lower-arm switch Sun that are connected in series with each other; a V-phase series connection unit consisting of a V-phase upper-arm switch SVp and a V-phase lower-arm switch SVn that are connected in series with each other; and a W-phase series connection unit consisting of a W-phase upper-arm switch SWp and a W-phase lower-arm switch SWn that are connected in series with each other. To a junction point between the U-phase upper-arm and lower-arm switches SUp and SUn, there is connected a first end of the U-phase winding 52U. To a junction point between the V-phase upper-arm and lower-arm switches SVp and SVn, there is connected a first end of the V-phase winding 52V. To a junction point between the W-phase upper-arm and lower-arm switches SWp and SWn, there is connected a first end of the W-phase winding 52W. On the other hand, a second end of the U-phase winding 52U, a second end of the V-phase winding 52V and a second end of the W-phase winding 52W are connected together at a neutral point. That is, in the present embodiment, the U-phase, V-phase and W-phase windings 52U, 52V and 52W of the stator coil 52 are star-connected. It should be noted that the U-phase, V-phase and W-phase windings 52U, 52V and 52W of the stator coil 52 may alternatively be delta-connected. Moreover, in the present embodiment, each of the switches SUp, SVp, SWp, SUn, SVn and SWn is implemented by an IGBT. In addition, each of the switches SUp, SVp, SWp, SUn, SVn and SWn has a freewheeling diode connected in antiparallel thereto.

Each of the U-phase, V-phase and W-phase upper-arm switches SUp, SVp and SWp has its collector connected to a positive electrode terminal of the DC power source 10. Each of the U-phase, V-phase and W-phase lower-arm switches SUn, SVn and SWn has its emitter connected to a negative electrode terminal of the DC power source 10. In addition, a smoothing capacitor 11 is connected in parallel with the DC power source 10.

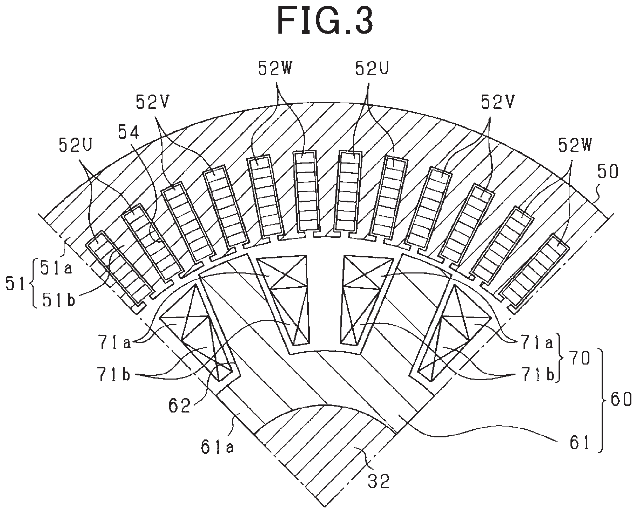

Next, the stator 50 and the rotor 60 will be described in detail with reference to FIG. 3.

In the rotating electric machine 40, both the stator 50 and the rotor 60 are arranged coaxially with the rotating shaft 32. Hereinafter, the direction in which a central axis of the rotating shaft 32 extends will be referred to as the axial direction; the directions of extending radially from the central axis of the rotating shaft 32 will be referred to as radial directions; and the direction of extending along a circle whose center is on the central axis of the rotating shaft 32 will be referred to as the circumferential direction.

The stator core 51 is formed of a soft-magnetic material. For example, the stator core 51 may be formed by laminating steel sheets in the axial direction. The stator core 51 has an annular back yoke 51a and a plurality of teeth 51b each protruding radially inward from the back yoke 51a. Between circumferentially adjacent teeth 51b, there are formed a plurality of slots 54 in alignment with each other in the circumferential direction. The stator coil 52 is formed by having the U-phase, V-phase and W-phase windings 52U, 52V and 52W accommodated in the slots 54 in a predetermined order. The stator 50 may have, for example, a segment coil structure in which a plurality of electrical conductor segments are employed. It should be noted that the structure of the stator coil 52 may be arbitrarily selected.

The rotor core 61 is also formed of a soft-magnetic material. For example, the rotor core 61 may be formed by laminating steel sheets in the axial direction. The rotor core 61 has a cylindrical portion 61a and a plurality of main pole portions 62 protruding radially outward from the cylindrical portion 61a. The field coil 70 is wound on the main pole portions 62 in a concentrated winding manner. More particularly, in the present embodiment, the rotor core 61 has eight main pole portions 62 formed at equal intervals in the circumferential direction.

The field coil 70 includes a first coil section 71a and a second coil section 71b. On each of the main pole portions 62, the first coil section 71a is wound on the radially outer side while the second coil section 71b is wound on the radially inner side. In terms of the relationship with the stator 50, the first coil section 71a is wound on the side closer to the stator 50 in the radial direction, whereas the second coil section 71b is wound on the side farther from the stator 50 in the radial direction. Moreover, on each of the main pole portions 62, the first and second coil sections 71a and 71b are wound in the same direction. Furthermore, for each circumferentially-adjacent pair of the main pole portions 62, the winding direction of the first and second coil sections 71a and 71b on one of the pair of the main pole portions 62 is opposite to the winding direction of the first and second coil sections 71a and 71b on the other of the pair of the main pole portions 62. Consequently, the magnetization directions of each circumferentially-adjacent pair of the main pole portions 62 become opposite to each other. In the rotor 60, by the main pole portions 62 of the rotor core 61 and the field coil 70 wound on the main pole portions 62, a plurality of magnetic poles (or field poles) are formed which are aligned with each other in the circumferential direction.

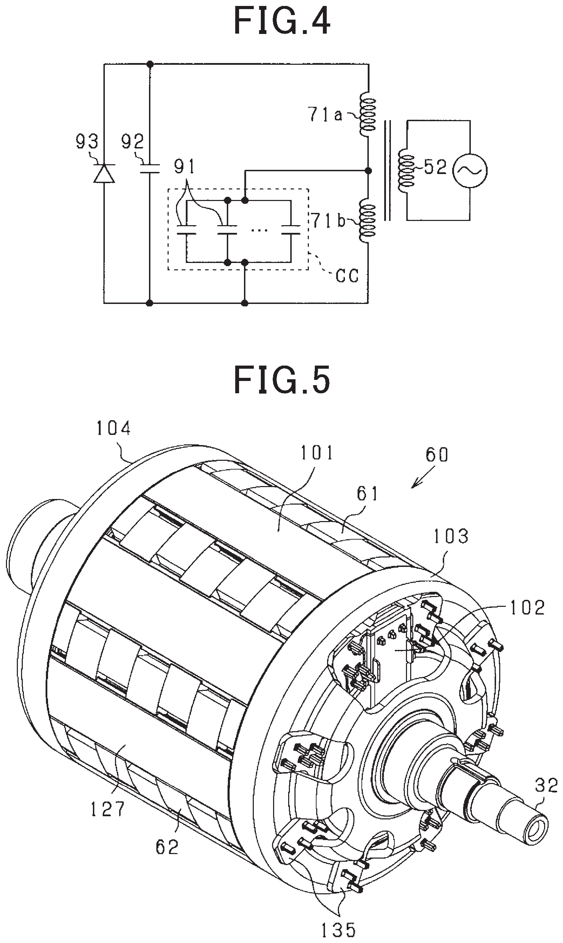

FIG. 4 shows an electric circuit which is formed in the rotor 60 and includes the first and second coil sections 71a and 71b wound on the main pole portions 62. The first coil section 71a and the second coil section 71b are connected in series with each other. A capacitor unit CC, which is constituted of a plurality of first capacitors 91, is connected in parallel with the second coil section 71b. The capacitor unit CC is configured as a parallel connection unit of the plurality of first capacitors 91 that are connected in parallel with each other. Moreover, a second capacitor 92 is connected in parallel with the series connection unit consisting of the first coil section 71a and the second coil section 71b. The second capacitor 92 is provided for noise suppression. The first capacitors 91 and the second capacitor 92 have the same configuration and may be implemented by, for example, multilayer ceramic capacitors.

A diode 93, which serves as a rectifying element, is connected between two ends of the series connection unit consisting of the first and second coil sections 71a and 71b. Specifically, a first end of the first coil section 71a is connected with the cathode of the diode 93; a second end of the first coil section 71a is connected with a first end of the second coil section 71b; and a second end of the second coil section 71b is connected with the anode of the diode 93.

In the present embodiment, the first coil section 71a, the first capacitors 91 and the diode 93 together form a series resonant circuit; and the second coil section 71b and the first capacitors 91 together form a parallel resonant circuit. That is, the first coil section 71a is connected in series with the first capacitors 91; and the second coil section 71b is connected in parallel with the first capacitors 91. Hereinafter, the resonance frequency of the series resonant circuit will be referred to as the first resonance frequency f1; and the resonance frequency of the parallel resonant circuit will be referred to as the second resonance frequency f2. The first and second resonance frequencies f1 and f2 can be respectively expressed by the following equations (1) and (2), where L1 is the inductance of the first coil section 71a, L2 is the inductance of the second coil section 71b, and C is the capacitance of the first capacitors 91.

$$f1 = 1 / (2\pi\sqrt{(L1 \times C)}) \qquad (1)$$

$$f2 = 1 / (2\pi\sqrt{(L2 \times C)}) \qquad (2)$$

Upon high-frequency excitation current flowing through the stator coil 52, main magnetic flux, which flows through a magnetic circuit that includes the stator core 51 and the rotor core 61, varies due to high-frequency components. With the variation in the main magnetic flux, voltages are induced respectively in the first and second coil sections 71a and 71b, thereby inducing electric currents respectively in the first and second coil sections 71a and 71b. Moreover, when the voltages induced respectively in the first and second coil sections 71a and 71b are of the same polarity, the electric currents induced respectively in the first and second coil sections 71a and 71b are not cancelled by each other, thus increasing the total electric current induced in the field coil 70. Furthermore, the electric currents induced respectively in the first and second coil sections 71a and 71b are rectified by the diode 93 to flow in one direction, namely the rectification direction. Consequently, field current flows in the field coil 70 in the rectification direction, thereby exciting the field coil 70.

Referring back to FIG. 2, the control device 30 is mainly composed of a microcomputer (corresponding to a computer) which includes a CPU. The control device 30 generates drive signals for turning on/off the switches SUp, SVp, SWp, SUn, SVn and SWn of the inverter 20. Specifically, in order to convert DC power outputted from the DC power source 10 into AC power and supply the resultant AC power to the U-phase, V-phase and W-phase windings 52U, 52V and 52W, the control device 30 generates drive signals for turning on/off the switches SUp, SVp, SWp, SUn, SVn and SWn and outputs the generated drive signals to the gates of the switches SUp, SVp, SWp, SUn, SVn and SWn.

In the present embodiment, the control device 30 turns on/off the switches SUp, SVp, SWp, SUn, SVn and SWn so as to supply resultant current, which is the resultant of fundamental current and high-frequency excitation current, to each of the U-phase, V-phase and W-phase windings 52U, 52V and 52W. The fundamental current is electric current mainly for causing the rotating electric machine 40 to generate torque. On the other hand, the high-frequency excitation current, whose frequency is higher than that of the fundamental current, is electric current mainly for exciting the field coil 70. It should be noted that harmonic current may be used as the high-frequency excitation current. In addition, U-phase, V-phase and W-phase currents, which are the resultant currents flowing respectively through the U-phase, V-phase and W-phase windings 52U, 52V and 52W, are offset in phase from each other by 120° in electrical angle.

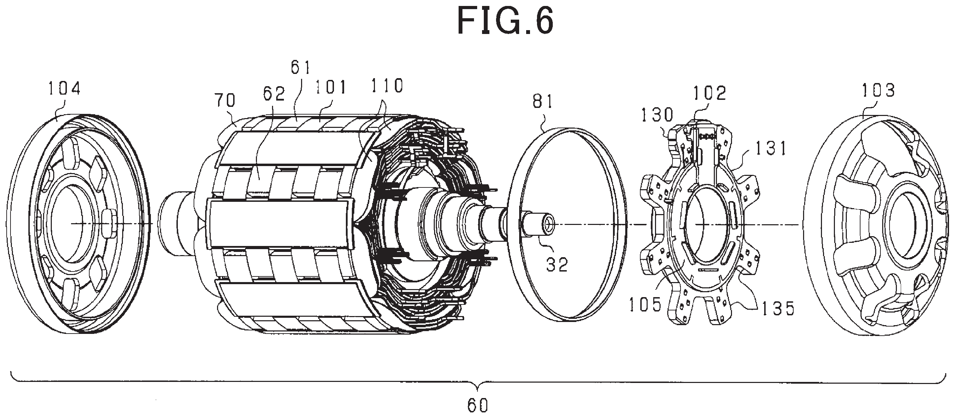

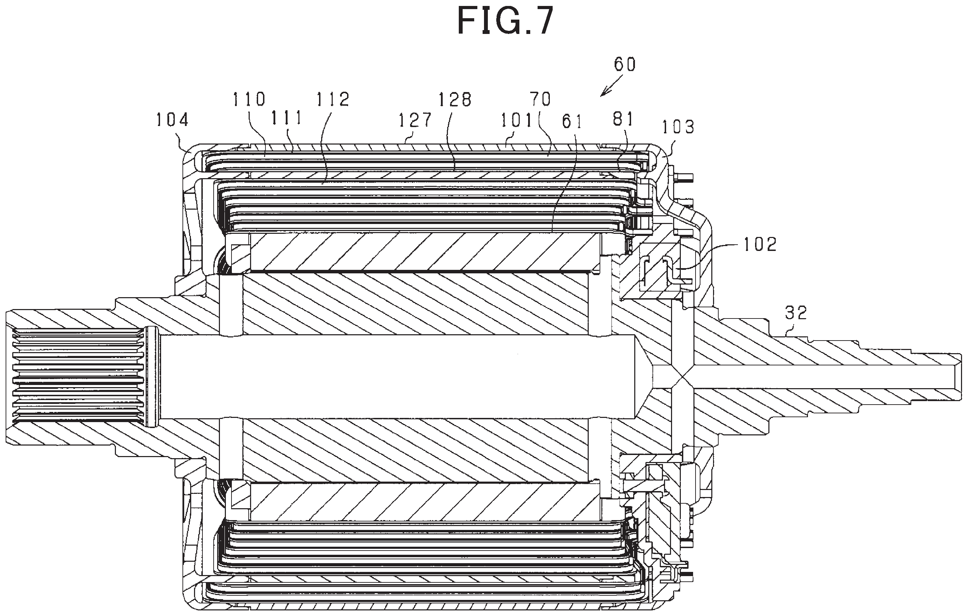

Next, the configuration of the rotor 60 will be described in more detail. FIG. 5 is a perspective view illustrating the overall configuration of the rotor 60. FIG. 6 is an exploded perspective view of the rotor 60. FIG. 7 is a longitudinal cross-sectional view of the rotor 60.

The rotor 60 mainly includes a rotor main body 101, a circuit module 102 provided on a first axial side of the rotor main body 101, and coil end covers 103 and 104 provided as annular members respectively on the first axial side and a second axial side of the rotor main body 101. The rotor main body 101 includes the rotor core 61 and the field coil 70 as described above with reference to FIG. 3, with the rotating shaft 32 fitted in the center hole of the rotor core 61. The field coil 70 is composed of a plurality of coil units 110 arranged in alignment with each other in the circumferential direction.

The circuit module 102 is fixed to the rotating shaft 32 that is inserted through a hollow part of the circuit module 102. The circuit module 102 is provided at a position axially facing a coil end part of the field coil 70. The circuit module 102 is an electric circuit unit which includes the capacitors 91 and 92 and the diode 93 described above with reference to FIG. 4, as well as busbars that electrically connect these elements.

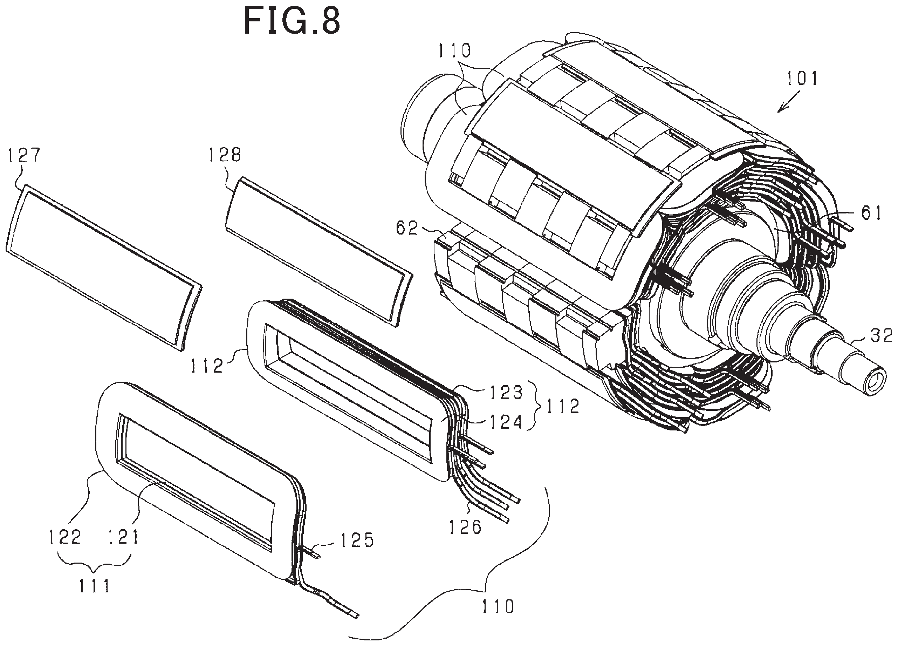

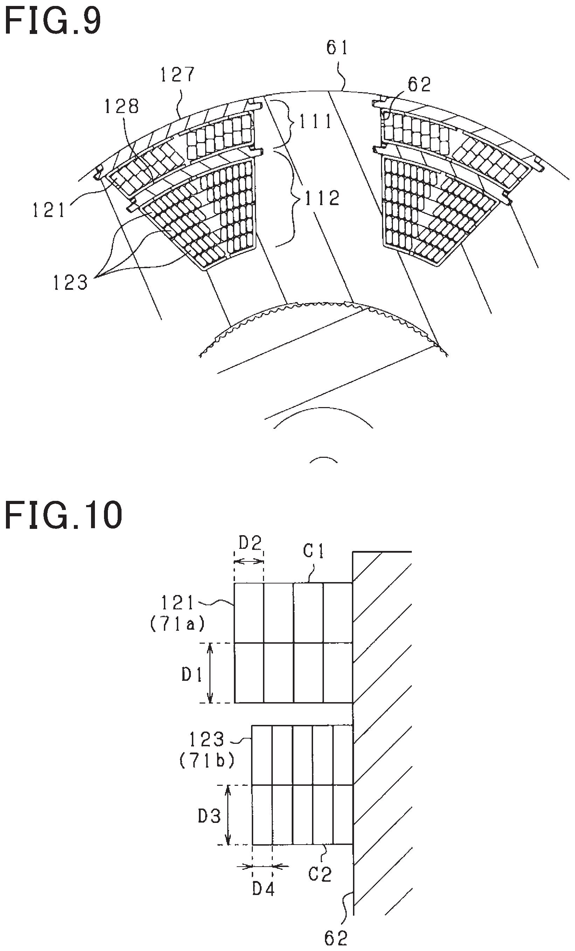

FIG. 8 is a perspective view of the rotor main body 101, showing one of the coil units 110 in a disassembled manner. FIG. 9 is a transverse cross-sectional view of part of the rotor main body 101. The rotor main body 101 has the coil units 110 provided respectively for the magnetic poles of the rotor 60. Each of the coil units 110 is formed in a ring shape whose longitudinal direction coincides with the axial direction. Moreover, each of the coil units 110 is assembled to the rotor core 61, with a corresponding one of the main pole portions 62 of the rotor core 61 inserted into a hollow part thereof.

Each of the coil units 110 includes a first coil module 111 and a second coil module 112 which are located respectively on the radially outer side and the radially inner side when mounted to the corresponding main pole portion 62. The first coil module 111 corresponds to the first coil section 71a, whereas the second coil module 112 corresponds to the second coil section 71b.

The first coil module 111 has: a ring-shaped coil body 121 formed by winding an electrical conductor wire, which is a flat wire, multiply in the circumferential and radial directions of the rotor 60; and a thin plate-shaped insulator 122 provided integrally with the coil body 121. The insulator 122 has portions extending in the circumferential direction and respectively covering radially outer and radially inner portions of the coil body 121, and portions extending in the radial direction and covering a hollow part of the coil body 121. That is, all of the radially outer and radially inner portions and inner peripheral portions of the coil body 121 are electrically insulated by being covered with the insulator 122; the inner peripheral portions of the coil body 121 are opposed to the corresponding main pole portion 62.

The second coil module 112 has: a ring-shaped coil body 123 formed by winding an electrical conductor wire, which is a flat wire, multiply in the circumferential and radial directions of the rotor 60; and a thin plate-shaped insulator 124 provided integrally with the coil body 123. The insulator 124 has portions extending in the circumferential direction and respectively covering radially outer and radially inner portions of the coil body 123, and portions extending in the radial direction and covering a hollow part of the coil body 123. That is, all of the radially outer and radially inner portions and inner peripheral portions of the coil body 123 are electrically insulated by being covered with the insulator 124; the inner peripheral portions of the coil body 123 are opposed to the corresponding main pole portion 62.

Each of the coil bodies 121 and 123 may be configured as, for example, an $\alpha$-wound coil. Moreover, each of the coil bodies 121 and 123 is an air-core coil in which the electrical conductor wire is wound multiply in the overlapping direction of the looping thereof (i.e., in the rotor circumferential direction) and in two layers in the direction in which the hollow part thereof extends (i.e., in the rotor radial direction). In the present embodiment, as the electrical conductor wires of the coil bodies 121 and 123, rectangular flat wires are employed each of which has a conductor cross section with longer sides and shorter sides. Moreover, each of the coil bodies 121 and 123 is wound such that the longer sides are overlapped multiply by the looping of the electrical conductor wire thereof. Furthermore, each of the flat wires is constituted of an electrical conductor such as aluminum or the like and an insulating layer covering the electrical conductor.

In the first coil module 111, two conductor wire end portions 125 are led out in the axial direction from a single coil body 121. On the other hand, in the second coil module 112, a total of six conductor wire end portions 126 are led out in the axial direction from three coil bodies 123 that are aligned in the radial direction.

As shown in FIG. 9, in the first coil module 111, the electrical conductor wire is wound in two layers in the radial direction; and in the second coil module 112, the electrical conductor wire is wound in six layers in the radial direction. In terms of the coil bodies 121 and 123, the first coil module 111 has a single coil body 121 arranged in the radial direction, while the second coil module 112 has three coil bodies 123 aligned in the radial direction. In this case, in each of the main pole portions 62, the number of turns of the second coil section 71b is greater than the number of turns of the first coil section 71a. In addition, the coil modules 111 and 112 have different numbers of windings in the circumferential direction (in other words, different numbers of electrical conductor wires aligned in the circumferential direction); the numbers of windings are greater on the radially outer side than on the radially inner side. Consequently, the space factor of the field coil 70 is improved.

Moreover, in the rotor main body 101, between the main pole portions 62 of the rotor core 61, there are provided holding plates 127 and 128 that hold, after the first and second coil modules 111 and 112 of the coil units 110 are assembled to the corresponding main pole portions 62, the assembled state of the coil modules 111 and 112. The holding plates 127 are mounted radially outside the first coil modules 111, whereas the holding plates 128 are mounted between the first coil modules 111 and the second coil modules 112 in the radial direction.

As shown in FIG. 6, the rotor 60 has a coil end ring 81 assembled to axial ends of the coil units 110. As shown in FIG. 7, the coil end ring 81 is located between coil end parts of the first coil modules 111 and coil end parts of the second coil modules 112 in the radial direction, and is sandwiched between the holding plates 128 and the coil end cover 103 in the axial direction.

In the present embodiment, in the wound-field rotor 60, the series resonant circuit and the parallel resonant circuit are formed by the first and second coil sections 71a and 71b of the field coil 70 and the first capacitors 91; and the number of turns of the second coil section 71b located on the radially inner side is set to be greater than the number of turns of the first coil section 71a located on the radially outer side. Setting the number of turns of the second coil section 71b to be greater than that of the first coil section 71a, the inductance of the second coil section 71b is increased, thereby making it possible to increase the field current. Moreover, setting the number of turns of the second coil section 71b to be greater than that of the first coil section 71a, the electric current value (or effective current value) of the second coil section 71b becomes lower than that of the first coil section 71a; in other words, the electric current allowed to flow through the second coil section 71b becomes lower than that allowed to flow through the first coil section 71a.

In view of the above, in the present embodiment, the conductor cross-sectional area of the electrical conductor wire used for the second coil section 71b is set to be smaller than the conductor cross-sectional area of the electrical conductor wire used for the first coil section 71a. Hereinafter, the characteristics of the coil structure of the field coil 70 will be described.

FIG. 10 is a cross-sectional view schematically showing the electrical conductor wires C1 and C2 of the first and second coil sections 71a and 71b of the field coil 70. It should be noted that: in FIG. 10, there are shown one coil body 121 of the first coil section 71a and one coil body 123 of the second coil section 71b both of which are wound on the corresponding main pole portion 62; and the up-down direction and the left-right direction in FIG. 10 are respectively the radial direction and the circumferential direction.

As shown in FIG. 10, the areas of transverse cross sections, namely the conductor cross-sectional areas, of the electrical conductor wire C1 of the coil body 121 (or the first coil section 71a) and the electrical conductor wire C2 of the coil body 123 (or the second coil section 71b) are different; and the conductor cross-sectional area of the electrical conductor wire C2 is smaller than that of the electrical conductor wire C1. More specifically, the following relationships are satisfied: D1 = D3; and D2 > D4, where D1 is the length of the longer sides of the electrical conductor wire C1, D2 is the length of the shorter sides of the electrical conductor wire C1, D3 is the length of the longer sides of the electrical conductor wire C2, and D4 is the length of the shorter sides of the electrical conductor wire C2. That is, the length of the longer sides of the electrical conductor wire C2 is equal to the length of the longer sides of the electrical conductor wire C1, but the length of the shorter sides of the electrical conductor wire C2 is less than the length of the shorter sides of the electrical conductor wire C1. Consequently, it becomes possible to increase the number of turns of the second coil section 71b in comparison with the case of using electrical conductor wires having the same conductor cross-sectional area for the first coil section 71a and the second coil section 71b.

As shown in FIG. 9, in the rotor core 61, the spaces between the circumferentially-adjacent main pole portions 62 are the winding spaces of the electrical conductor wires; and when viewed in the radial direction, the winding spaces are relatively narrower on the radially inner side. In this regard, since the conductor cross-sectional area of the electrical conductor wire C2 of the second coil section 71b is smaller than the conductor cross-sectional area of the electrical conductor wire C1 of the first coil section 71a, the number of turns of the electrical conductor wire C2 can be secured even in the relatively narrower winding spaces.

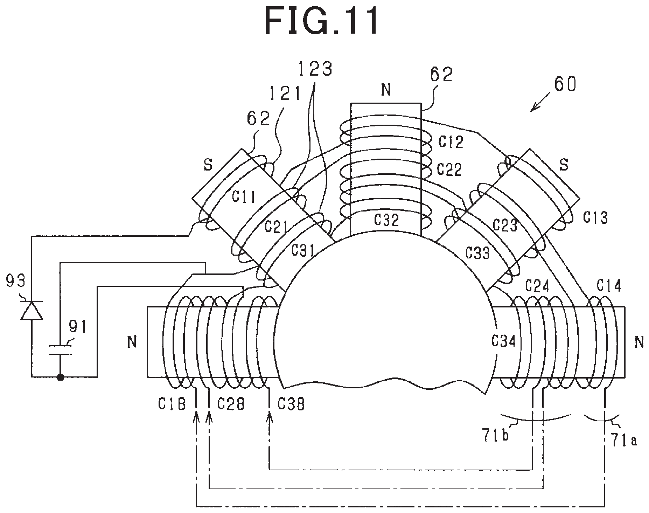

FIG. 11 is a schematic diagram showing the first and second coil sections 71a and 71b in a state of having been wound on the main pole portions 62 of the rotor core 61. It should be noted that in FIG. 11, the two radially outer conductor layers form the first coil section 71a, while the four radially inner conductor layers form the second coil section 71b. The first coil section 71a is formed by assembling the coil bodies 121 respectively to the main pole portions 6, which are aligned in the circumferential direction, and connecting the coil bodies 121 in series with each other. It also should be noted that in FIG. 11, the coil bodies 121 constituting the first coil section 71a are designated sequentially in the clockwise direction by C11, C12, C13, ..., and C18. The first coil section 71a is formed by connecting each circumferentially-adjacent pair of the coil bodies C11 to C18 in series with each other.

The second coil section 71b is formed by assembling two coil bodies 123 to each of the main pole portions 62, which are aligned in the circumferential direction, and connecting all the coil bodies 123 in series with each other. It should be noted that in FIG. 11, those coil bodies 123 of the second coil section 71b which are located radially adjacent to the first coil section 71a are designated sequentially in the clockwise direction by C21, C22, C23, ..., and C28; and those coil bodies 123 of the second coil section 71b which are located radially inside the coil bodies C21 to C28 are designated sequentially in the clockwise direction by C31, C32, C33, ..., and C38. The second coil section 71b is formed by connecting an end of a series connection unit of the coil bodies C21 to C28 and an end of a series connection unit of the coil bodies C31 to C38. In addition, in FIG. 11, for the sake of convenience of explanation, there is illustrated the case where two coil bodies 123 are assembled to each of the main pole portions 62; however, the same applies to cases where three or more coil bodies 123 are assembled to each of the main pole portions 62.

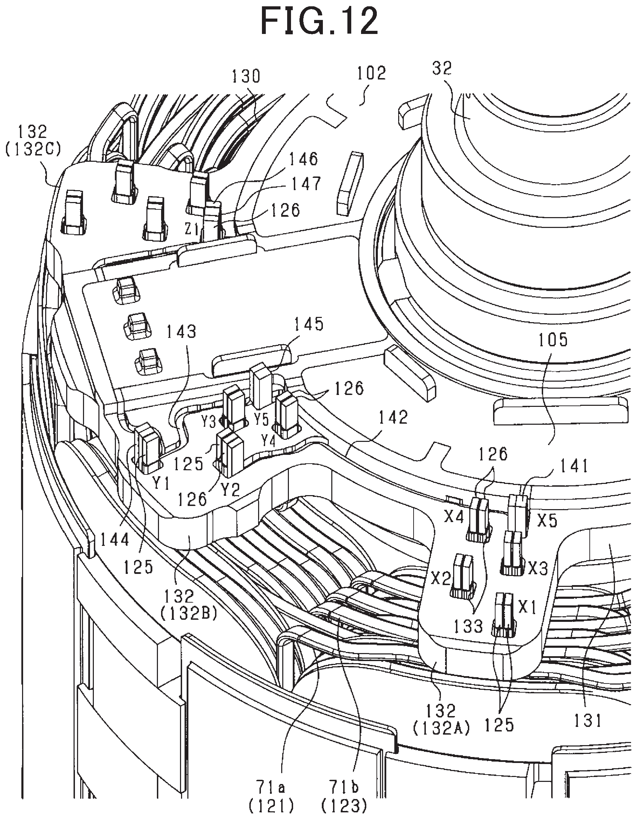

FIG. 12 is a perspective view showing a configuration of the rotor 60 for the connection of the coil bodies 121 and 123 of the first and second coil sections 71a and 71b. In addition, in FIG. 12, there is also shown the circuit module 102 in a state of having been assembled to one axial side of the rotor main body 101.

The circuit module 102 includes a component holder 130 that holds the capacitors 91 and 92 and the diode 93 described above. The component holder 130 is formed of an electrically-insulative material such as a synthetic resin. The component holder 130 has a main body portion 131 formed in an annular shape, and a plurality of conductor wire fixing portions 132 extending radially outward from the main body portion 131 in a radial fashion. In addition, although not shown in FIG. 12 because of being covered by a resin molded portion 105, the capacitors 91 and 92 and the diode 93 are provided in alignment with each other, in the main body portion 131, in an annular shape surrounding the rotating shaft 32.

The number of the conductor wire fixing portions 132 formed in the component holder 130 is set to be equal to the number of the main pole portions 62 (i.e., equal to eight in the present embodiment). In each of the conductor wire fixing portions 132, there are formed a plurality of insertion holes 133 penetrating the conductor wire fixing portion 132 in the axial direction. Moreover, in the insertion holes 133 of the conductor wire fixing portions 132, there are respectively inserted the conductor wire end portions 125 and 126 that extend from the respective coil bodies 121 and 123 of the first and second coil sections 71a and 71b; and those of the conductor wire end portions 125 and 126 which are inserted in the same one of the insertion holes 133 are joined to each other by welding or the like.

Hereinafter, of the eight conductor wire fixing portions 132 of the component holder 130, the three conductor wire fixing portions 132A, 132B and 132C shown in FIG. 12 will be described in detail.

In the conductor wire fixing portion 132A, of the coil bodies 121 and 123 arranged in four rows in the radial direction, those coil bodies which are arranged in the same row are connected to each other. Specifically, in the conductor wire fixing portion 132A, at a connection portion X1, a circumferentially-adjacent pair of the coil bodies 121 each have one conductor wire end portion 125 thereof inserted in the insertion hole 133; and the conductor wire end portions 125 of the circumferentially-adjacent pair of the coil bodies 121 are connected to each other. Moreover, at each of connection portions X2 to X4, a circumferentially-adjacent pair of the coil bodies 123 each have one conductor wire end portion 126 thereof inserted in the insertion hole 133; and the conductor wire end portions 126 of the circumferentially-adjacent pair of the coil bodies 123 are connected to each other. Furthermore, at a connection portion X5, busbars 141 and 142 for connection with the first capacitors 91 are connected to each other.

At each of the connection portions X1 to X4, i.e., at each of those portions where the corresponding pair of the conductor wire end portions 125 of the coil bodies 121 or the corresponding pair of the conductor wire end portions 126 of the coil bodies 123 are connected to each other, the coil bodies 121 or 123 are connected by welding or the like with the longer sides of the electrical conductor wires thereof, which are flat wires, joined to each other. Consequently, it becomes possible to secure larger joining surfaces than in the case of joining the shorter sides of the electrical conductor wires of the coil bodies to each other. As a result, it becomes possible to achieve proper connection between the coil bodies in terms of both strength and conductivity.

In the conductor wire fixing portion 132A, the corresponding conductor wire end portions 126 of the coil bodies 123 are connected to each other at the three connection portions X2 to X4. That is, in the second coil section 71b, the number of locations where the corresponding conductor wire end portions 126 are connected to each other is equal to the number of the coil bodies 123 aligned in the radial direction. With the conductor cross-sectional area of each of the electrical conductor wires C2 of the coil bodies 23 set to be smaller than the conductor cross-sectional area of each of the electrical conductor wires C1 of the coil bodies 121, if the radial width dimension of each of the electrical conductor wires C2 in the second coil section 71b was set to be less than the radial width dimension of each of the electrical conductor wires C1 in the first coil section 71a, the number of the coil bodies 123 aligned in the radial direction would be increased and thus the number of locations where the corresponding coil bodies 123 are connected to each other would also be increased. In this regard, in the present embodiment, the conductor cross-sectional area of each of the electrical conductor wires C2 of the coil bodies 123 is reduced by setting the circumferential width dimension of each of the electrical conductor wires C2 to be less than the circumferential width dimension of each of the electrical conductor wires C1 of the coil bodies 121; therefore, there is no increase in the number of the coil bodies 123 aligned in the radial direction. Consequently, it becomes possible to prevent the work efficiency from being lowered due to increase in the number of locations where the corresponding coil bodies 123 are connected to each other.

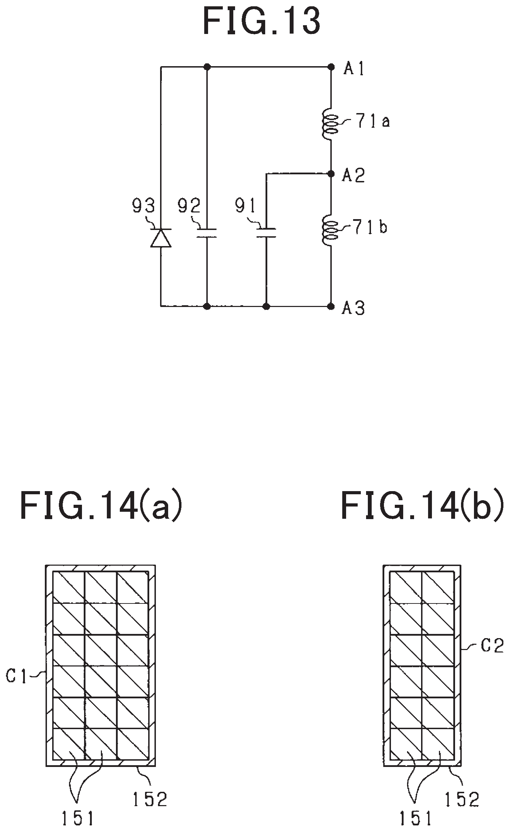

On the other hand, in the conductor wire fixing portion 132B, connection between the coil bodies 121 and 123 in different rows (i.e., lane change connection) and connection of the coil bodies 121 and 123 with the capacitors 91 and 92 and the diode 93 via busbars are made. Specifically, in the conductor wire fixing portion 132B, at a connection portion Y1, a conductor wire end portion 125 of one of the coil bodies 121 of the first coil section 71a, an end of a busbar 143 for the second capacitor 92, and an end of a busbar 144 for the cathode of the diode 93 are connected together. The connection at the connection portion Y1 corresponds to the connection at a connection point A1 in the circuit diagram of FIG. 13. Moreover, at a connection portion Y2, a conductor wire end portion 125 of one of the coil bodies 121 of the first coil section 71a, a conductor wire end portion 126 of one of the coil bodies 123 of the second coil section 71b, and an end of the busbar 142 for the first capacitors 91 are connected together. The connection at the connection portion Y2 corresponds to the connection at a connection point A2 in the circuit diagram of FIG. 13.

At the connection portion Y2, the connection between the conductor wire end portions 125 and 126 of the coil bodies 121 and 123 are made with the electrical conductor wires C1 and C2 (see FIG. 10), which have different conductor cross-sectional areas, joined to each other. Specifically, the electrical conductor wires C1 and C2 of the coil bodies 121 and 123 are connected by welding or the like with their longer sides joined to each other. Consequently, although the conductor cross-sectional areas of the electrical conductor wires C1 and C2 of the coil bodies 121 and 123 are different from each other, with the lengths of the longer sides of the electrical conductor wires C1 and C2 equal to each other, it still becomes possible to secure sufficient joining surfaces between the electrical conductor wires C1 and C2.

At each of connection portions Y3 and Y4, a pair of the conductor wire end portions 126 of the coil bodies 123 in different rows are connected to each other. At a connection portion Y5, busbars 143 and 145 for connection with the second capacitor 92 are connected to each other.

In the conductor wire fixing portion 132C, at a connection portion Z1, a conductor wire end portion 126 of one of the coil bodies 123 of the second coil section 71b, an end of a busbar 146 common to the capacitors 91 and 92, and an end of a busbar 147 for the anode of the diode 93 are connected together. The connection at the connection portion Z1 corresponds to the connection at a connection point A3 in the circuit diagram of FIG. 13.

At least one of the electrical conductor wires C1 and C2 of the first and second coil sections 71a and 71b may be configured as a bundled wire (or divided wire) that is formed by bundling a plurality of element wires.

Specifically, as shown in FIG. 14(a), an electrical conductor wire C1 is constituted of a plurality of element wires 151 and an outer peripheral covering portion 152 that covers the element wires 151 from the outer peripheral side thereof. Similarly, as shown in FIG. 14(b), an electrical conductor wire C2 is constituted of a plurality of element wires 151 and an outer peripheral covering portion 152 that covers the element wires 151 from the outer peripheral side thereof. The element wires 151 used for forming the electrical conductor wire C1 are identical to those used for forming the electrical conductor wire C2. However, the number of the element wires 151 used for forming the electrical conductor wire C1 is different from that of the element wires 151 used for forming the electrical conductor wire C2; therefore, the electrical conductor wire C1 has a transverse cross section different from that of the electrical conductor wire C2. Moreover, each of the element wires 151 may be a coated conductor wire which includes an electrical conductor and an insulating coat that covers the electrical conductor. It should be noted that the element wires 151 used for forming the electrical conductor wire C1 may be different from those used for forming the electrical conductor wire C2. For example, the cross-sectional area of each of the element wires 151 used for forming the electrical conductor wire C1 may be set to be greater than the cross-sectional area of each of the element wires 151 used for forming the electrical conductor wire C2. Furthermore, each of the element wires 151 is a flat wire having a rectangular transverse cross section, but may alternatively be a round wire. It also should be noted that each of the electrical conductor wires C1 and C2 may alternatively be configured as a stranded wire that is formed by stranding a plurality of element wires 151.

In the rotating electric machine 40, high-frequency current corresponding to the excitation frequency flows in the field coil 70 of the rotor 60; therefore, each of the coil sections 71a and 71b of the field coil 70 may be affected by the skin effect. In this regard, by configuring each of the electrical conductor wires C1 and C2 of the coil sections 71a and 71b as a bundled wire in which a plurality of element wires 151 are bundled together, i.e., as a divided wire in which the conductor cross section is divided into a plurality of parts, the coil sections 71a and 71b become less affected by the skin effect.

Moreover, of the field coil 70, the first coil section 71a on the radially outer side is closer to the stator 50, whereas the second coil section 71b on the radially inner side is farther from the stator 50; therefore, eddy current loss may occur in the first coil section 71a due to leakage magnetic flux of high-frequency excitation magnetic flux from the stator 50 crossing the first coil section 71a. As a countermeasure to the above problem, the volume resistivity of a conductor material of the first coil section 71a may be set to be higher than the volume resistivity of a conductor material of the second coil section 71b.

For example, the conductor material of the first coil section 71a (i.e., the coil bodies 121) may be aluminum; and the conductor material of the second coil section 71b (i.e., the coil bodies 123) may be copper. Alternatively, the conductor material of the first coil section 71a may be CNT (i.e., carbon nanotube); and the conductor material of the second coil section 71b may be copper. Consequently, the first coil section 71a will become less affected by the leakage magnetic flux, making it possible to reduce eddy current loss occurring therein. Moreover, since the conductor materials of the first and second coil sections 71a and 71b are different from each other and the conductor material of the second coil section 71b, which is relatively less affected by the leakage magnetic flux, has a lower electrical resistance, reduction in the electric current in the second coil section 71b will be suppressed.

In the case of forming the first coil section 71a with an aluminum wire and the second coil section 71b with a copper wire, the conductor material of the first coil section 71a has a higher volume resistivity and a lower specific gravity than the conductor material of the second coil section 71b. Consequently, it will become possible to achieve, in the first coil section 71a on the radially outer side (i.e., on the stator 50 side), reduction in the centrifugal force during rotation of the rotor 60 as well as reduction in the eddy current loss caused by the leakage magnetic flux from the stator 50.

In the case of the first and second coil sections 71a and 71b being formed of different materials, galvanic corrosion may occur due to moisture adhering to a joint portion therebetween. In view of the above, it is preferable that the joint portion between the electrical conductor wires of the first and second coil sections 71a and 71b be covered with an insulating material.

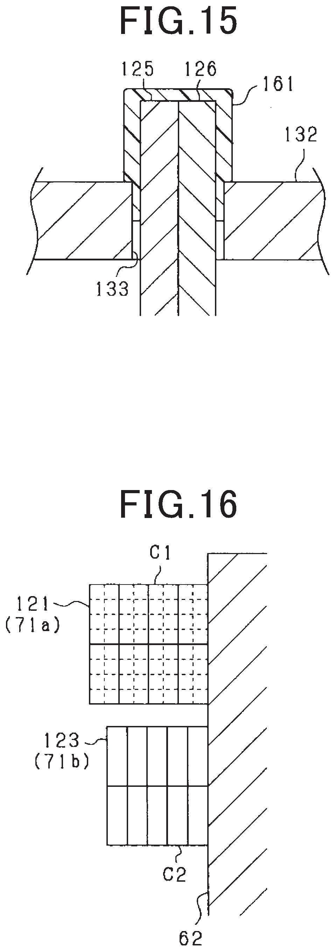

FIG. 15 is a longitudinal cross-sectional view showing a conductor wire end portion 125 of a coil body 121 and a conductor wire end portion 126 of a coil body 123 in a state of having been joined together in the component holder 130 of the circuit module 102. As shown in FIG. 15, the conductor wire end portions 125 and 126 of the coil bodies 121 and 123 are inserted into an insertion hole 133 formed in a conductor wire fixing portion 132 of the component holder 130, and then joined together at distal ends thereof by welding or the like. A resin covering portion 161 is formed so as to cover the joint portion between the conductor wire end portions 125 and 126; the resin covering portion 161 is formed of a resin material such as an epoxy resin. It is preferable for the resin covering portion 161 to be formed so as to cover the entire joint portion between the conductor wire end portions 125 and 126 and have part thereof entering the insertion hole 133 of the conductor wire fixing portion 132. With the resin covering portion 161, it becomes possible to suppress, when the first and second coil sections 71a and 71b are formed of different materials, galvanic corrosion at the joint portion therebetween.

In addition, the resin covering portion 161 may be formed not only at the joint portion between the conductor wire end portion 125 of the coil body 121 and the conductor wire end portion 126 of the coil body 123, but also at other joint portions, i.e., joint portions between the conductor wire end portions 125 of the coil bodies 121 and joint portions between the conductor wire end portions 126 of the coil bodes 123.

According to the present embodiment described above in detail, it is possible to achieve the following advantageous effects.

In the field coil 70, the volume resistivity of the conductor material of the first coil section 71a is set to be higher than the volume resistivity of the conductor material of the second coil section 71b. Consequently, it becomes possible to make the first coil section 71a less affected by the leakage magnetic flux. As a result, it becomes possible to reduce eddy current loss occurring in, of the first coil section 71a and the second coil section 71b that together constitute the field coil 70, the first coil section 71a located on the stator 50 side.

In the field coil 70, the conductor material of the first coil section 71a has a higher volume resistivity and a lower specific gravity than the conductor material of the second coil section 71b. In other words, a high-resistance and lightweight material, which is relatively high in electrical resistance and light in weight, is employed as the conductor material of the first coil section 71a located on the radially outer side. Consequently, it becomes possible to achieve, in the first coil section 71a, reduction in the centrifugal force during rotation of the rotor 60 as well as reduction in the eddy current loss caused by the leakage magnetic flux from the stator 50.

In the rotating electric machine 40, high-frequency current corresponding to the excitation frequency flows in the field coil 70 of the rotor 60; therefore, each of the first and second coil sections 71a and 71b of the field coil 70 may be affected by the skin effect. In this regard, by employing bundled wires as the electrical conductor wires of the first and second coil sections 71a and 71b, it becomes possible to make the first and second coil sections 71a and 71b less affected by the skin effect, thereby achieving further loss-suppression.

If the first and second coil sections 71a and 71b of the field coil 70 are formed of different materials, galvanic corrosion may occur due to moisture adhering to a joint portion therebetween. In view of the above, in the present embodiment, the joint portion between the electrical conductor wires of the first and second coil sections 71a and 71b is covered with an insulating material. Consequently, it becomes possible to suppress, when the first and second coil sections 71a and 71b are formed of different materials, galvanic corrosion at the joint portion therebetween.

(Other Embodiments)

The above-described embodiment may be modified, for example, as follows.

Either the electrical conductor wires C1 of the first coil section 71a or the electrical conductor wires C2 of the second coil section 71b may be configured as bundled wires. Alternatively, both the electrical conductor wires C1 of the first coil section 71a and the electrical conductor wires C2 of the second coil section 71b may be configured as bundled wires.

FIG. 16 illustrates a configuration in which the electrical conductor wires C1 of the first coil section 71a are configured as bundled wires, whereas the electrical conductor wires C2 of the second coil section 71b are configured as solid wires. With this configuration, the effect of reducing overcurrent loss in the first coil section 71a, which is susceptible to leakage magnetic flux of high-frequency excitation magnetic flux from the stator 50, can be enhanced. On the other hand, it is easier for variations in outer diameter to occur in bundled wires than in solid wires. Therefore, if the electrical conductor wires C2 of the second coil section 71b, which are wound on radially inner parts of the main pole portions 62, are configured as bundled wires, the winding work of the electrical conductor wires C2 may be affected by the dimensional variations in the relatively narrow space. In this regard, by configuring the electrical conductor wires C2 of the second coil section 71b as solid wires, the winding work of the electrical conductor wires C2 can be prevented from being affected by dimensional variations in the electrical conductor wires C2.

In the above-described embodiment, the conductor cross-sectional area of each of the electrical conductor wires C2 used for the second coil section 71b is set to be smaller than that of each of the electrical conductor wires C1 used for the first coil section 71a by setting the length of the longer sides of each of the electrical conductor wires C2 to be equal to that of the longer sides of each of the electrical conductor wires C1 and setting the length of the shorter sides of each of the electrical conductor wires C2 to be less than that of the shorter sides of each of the electrical conductor wires C1 (see FIG. 10). As an alternative, the length of the shorter sides of each of the electrical conductor wires C2 may be set to be equal to that of the shorter sides of each of the electrical conductor wires C1; and the length of the longer sides of each of the electrical conductor wires C2 may be set to be less than that of the longer sides of each of the electrical conductor wires C1. As another alternative, both the length of the longer sides and the length of the shorter sides of each of the electrical conductor wires C2 may be set to be less than those of each of the electrical conductor wires C1.

In the above-described embodiment, the electrical conductor wires of both the first and second coil sections 71a and 71b are implemented by flat wires. As an alternative, the electrical conductor wires of one of the first and second coil sections 71a and 71b may be implemented by flat wires; and the electrical conductor wires of the other of the first and second coil sections 71a and 71b may be implemented by round wires. As another alternative, the electrical conductor wires of both the first and second coil sections 71a and 71b may be implemented by round wires.

In the above-described embodiment, each corresponding pair of the conductor wire end portions of the coil bodies 121 and 123 of the first and second coil sections 71a and 71b are joined together by welding. Alternatively, each corresponding pair of the conductor wire end portions may be joined together by crimping or bolt fastening.

The first and second coil sections 71a and 71b may be formed of the same conductor material. Specifically, the conductor material of both the first and second coil sections 71a and 71b may be, for example, aluminum, copper or CNT.

The rotating electric machine 40 is not limited to an inner rotor type rotating electric machine, but may alternatively be an outer rotor type rotating electric machine in which the stator 50 is arranged radially inside the rotor 60. In this case, the main pole portions 62 protrude radially inward from an annular yoke portion of the rotor core. Moreover, of the field coil 70, the first coil section 71a is arranged on the radially inner side (i.e., on side closer to the stator 50 in the radial direction), whereas the second coil section 71b is arranged on the radially outer side (i.e., on the side farther from the stator 50 in the radial direction).

In the stator 50, the stator core 51 may alternatively be a toothless core having no teeth formed therein.

The rotating electric machine 40 is not limited to a rotating electric machine used as an in-vehicle main machine, but may alternatively be, for example, an ISG (Integrated Starter Generator) that serves both as an electric motor and as an electric generator.

The mobile object in which the rotating electric machine system is installed is not limited to a vehicle, but may alternatively be, for example, an aircraft or a ship. Moreover, the rotating electric machine system is not limited to a system installed in a mobile object, but may alternatively be a stationary system.

Technical ideas derived from the above-described embodiments will be described below.

[First Configuration]

A wound-field rotating electric machine (40) comprising:

a stator (50) including a stator coil (52); and
a rotor (60) including a rotor core (61) and a field coil (70), the rotor core having main pole portions (62) provided respectively for magnetic poles, which are aligned in a circumferential direction, and each protruding in a radial direction, the field coil being wound on the main pole portions of the rotor core, wherein:

the wound-field rotating electric machine is configured to have high-frequency current flowing through the stator coil for inducing field current in the field coil;

the field coil has a first coil section (71a) and a second coil section (71b) that are connected in series with each other to form a series connection unit;

each of the first and second coil sections is wound on all of the main pole portions of the rotor core such that the first coil section is located on a side closer to the stator in the radial direction, whereas the second coil section is located on a side farther from the stator in the radial direction;

the first coil section is connected in series with a capacitor (91) to form a series resonant circuit, whereas the second coil section is connected in parallel with the capacitor to form a parallel resonant circuit; and

the volume resistivity of a conductor material of the first coil section is higher than the volume resistivity of a conductor material of the second coil section.

[Second Configuration]

The wound-field rotating electric machine according to the first configuration, wherein:

the wound-field rotating electric machine has an inner rotor structure such that the stator is arranged on an outer side in the radial direction, whereas the rotor is arranged on an inner side in the radial direction; and

the conductor material of the first coil section has a lower specific gravity than the conductor material of the second coil section.

[Third Configuration]

The wound-field rotating electric machine according to the first or second configuration, wherein at least one of electrical conductor wires of the first and second coil sections is a bundled wire that is formed by bundling a plurality of element wires.

[Fourth Configuration]

The wound-field rotating electric machine according to the first or second configuration, wherein:

the wound-field rotating electric machine has an inner rotor structure such that the stator is arranged on an outer side in the radial direction, whereas the rotor is arranged on an inner side in the radial direction; and

an electrical conductor wire of the first coil section is a bundled wire that is formed by bundling a plurality of element wires, whereas an electrical conductor wire of the second coil section is not a bundled wire.

[Fifth Configuration]

The wound-field rotating electric machine according to any one of the first to fourth configurations, wherein:

the first and second coil sections are electrically connected with each other by having an electrical conductor wire of the first coil section and an electrical conductor wire of the second coil section joined to each other; and
a joint portion between the electrical conductor wires of the first and second coil sections is covered with an insulating material.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

**Claims**

1. A wound-field rotating electric machine (40) comprising:

   a stator (50) including a stator coil (52); and
   a rotor (60) including a rotor core (61) and a field coil (70), the rotor core having main pole portions (62) provided respectively for magnetic poles, which are aligned in a circumferential direction, and each protruding in a radial direction, the field coil being wound on the main pole portions of the rotor core,
   wherein:

      the wound-field rotating electric machine is configured to have high-frequency current flowing through the stator coil for inducing field current in the field coil;
      the field coil has a first coil section (71a) and a second coil section (71b) that are connected in series with each other to form a series connection unit;
      each of the first and second coil sections is wound on all of the main pole portions of the rotor core such that the first coil section is located on a side closer to the stator in the radial direction, whereas the second coil section is located on a side farther from the stator in the radial direction;
      the first coil section is connected in series with a capacitor (91) to form a series resonant circuit, whereas the second coil section is connected in parallel with the capacitor to form a parallel resonant circuit; and
the volume resistivity of a conductor material of the first coil section is higher than the volume resistivity of a conductor material of the second coil section.

2. The wound-field rotating electric machine as set forth in Claim 1, wherein:

   the wound-field rotating electric machine has an inner rotor structure such that the stator is arranged on an outer side in the radial direction, whereas the rotor is arranged on an inner side in the radial direction; and
   the conductor material of the first coil section has a lower specific gravity than the conductor material of the second coil section.

3. The wound-field rotating electric machine as set forth in Claim 1 or 2, wherein at least one of electrical conductor wires of the first and second coil sections is a bundled wire that is formed by bundling a plurality of element wires.

4. The wound-field rotating electric machine as set forth in Claim 1 or 2, wherein:

   the wound-field rotating electric machine has an inner rotor structure such that the stator is arranged on an outer side in the radial direction, whereas the rotor is arranged on an inner side in the radial direction; and
   an electrical conductor wire of the first coil section is a bundled wire that is formed by bundling a plurality of element wires, whereas an electrical conductor wire of the second coil section is not a bundled wire.

5. The wound-field rotating electric machine as set forth in Claim 1 or 2, wherein:

   the first and second coil sections are electrically connected with each other by having an electrical conductor wire of the first coil section and an electrical conductor wire of the second coil section joined to each other; and
   a joint portion between the electrical conductor wires of the first and second coil sections is covered with an insulating material.

# FIG.1

# FIG.2

# FIG.3

# FIG.4

# FIG.5

# FIG.6

EP 4 749 894 A1

# FIG.7

EP 4 749 894 A1

FIG.8

# FIG.9

# FIG.10

# FIG.11

# FIG.12

# FIG.13

A1

93 92 91 71a

A2

71b

A3

# FIG.14(a)　　　　FIG.14(b)

C1

C2

152

151

152

151

# FIG.15

# FIG.16

## INTERNATIONAL SEARCH REPORT

| International application No. |
|---|
| **PCT/JP2024/024093** |

| A. | CLASSIFICATION OF SUBJECT MATTER |
|---|---|

*H02K 19/36*(2006.01)i; *H02K 19/26*(2006.01)i
FI:   H02K19/36 Z; H02K19/26 Z

According to International Patent Classification (IPC) or to both national classification and IPC

| B. | FIELDS SEARCHED |
|---|---|

Minimum documentation searched (classification system followed by classification symbols)

H02K19/36; H02K19/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2020-191743 A (DENSO CORPORATION) 26 November 2020 (2020-11-26) paragraphs [0022]-[0033], fig. 1-3 | 1-5 |
| Y | JP 2013-038918 A (TOYOTA JIDOSHA KABUSHIKI KAISHA) 21 February 2013 (2013-02-21) paragraphs [0018], [0041], fig. 3 | 1-5 |
| Y | JP 2006-019155 A (TOYOTA JIDOSHA KABUSHIKI KAISHA) 19 January 2006 (2006-01-19) paragraphs [009]-[0027], fig. 1-4 | 5 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2024** | **24 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 749 894 A1

INTERNATIONAL SEARCH REPORT
Information on patent family members

International application No.

**PCT/JP2024/024093**

| Patent document cited in search report | | | Publication date (day/month/year) | Patent family member(s) | Publication date (day/month/year) |
|---|---|---|---|---|---|
| JP | 2020-191743 | A | 26 November 2020 | US 2020/0373823 A1 paragraphs [0041]-[0055], fig. 1-3 CN 111987832 A | |
| JP | 2013-038918 | A | 21 February 2013 | (Family: none) | |
| JP | 2006-019155 | A | 19 January 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023118125 A
- JP 2020054064 A